# EUROPÄISCHE PATENTSCHRIFT

(11) **EP 1 481 035 B1**
(45) Veröffentlichungstag und Bekanntmachung des Hinweises auf die Patenterteilung: **20.08.2008**
(21) Anmeldenummer: 03743304.2
(22) Anmeldetag: 23.01.2003
(51) Int. Cl.: C09K 3/18, D06M 11/79

(54) **HYDROPHILE OBERFLÄCHEN**
HYDROPHILIC SURFACES
SURFACES HYDROPHILES

(30) Priorität: 07.03.2002 DE 10210027
(43) Veröffentlichungstag der Anmeldung: 01.12.2004
(73) Patentinhaber: Evonik Degussa GmbH, 45128 Essen (DE)
(72) Erfinder: OLES, Markus, 45525 Hattingen (DE); NUN, Edwin, 48727 Billerbeck (DE)
(86) Internationale Anmeldenummer: PCT/EP2003/000642
(87) Internationale Veröffentlichungsnummer: WO 2003/074194

(56) Entgegenhaltungen:
- EP-A- 1 095 760
- EP-A- 1 166 860
- EP-A- 1 254 941
- WO-A-01/83662
- WO-A-01/96511
- WO-A-01/96512
- WO-A-93/08236
- WO-A-02/084016
- DE-A- 19 952 383
- FR-A- 2 147 839
- FR-A- 2 385 538
- GB-A- 833 284
- PATENT ABSTRACTS OF JAPAN Bd. 0173, Nr. 91 (C-1087), 22. Juli 1993 (1993-07-22) & JP 5 070625 A (MITSUBISHI PETROCHEM CO LTD), 23. März 1993 (1993-03-23) -& JP 05 070625 A (MITSUBISHI PETROCHEM CO LTD) 23. März 1993 (1993-03-23)
- PATENT ABSTRACTS OF JAPAN Bd. 0161, Nr. 33 (C-0925), 6. April 1992 (1992-04-06) & JP 3 294573 A (UNITIKA LTD), 25. Dezember 1991 (1991-12-25) -& JP 03 294573 A (UNITIKA LTD) 25. Dezember 1991 (1991-12-25)
- PATENT ABSTRACTS OF JAPAN Bd. 2002, Nr. 10, 10. Oktober 2002 (2002-10-10) & JP 2002 161240 A (CENTRAL GLASS CO LTD), 4. Juni 2002 (2002-06-04) -& JP 2002 161240 A (CENTRAL GLASS CO LTD) 4. Juni 2002 (2002-06-04)
- PATENT ABSTRACTS OF JAPAN Bd. 1997, Nr. 11, 28. November 1997 (1997-11-28) & JP 9 194234 A (CENTRAL GLASS CO LTD), 29. Juli 1997 (1997-07-29) -& JP 09 194234 A (CENTRAL GLASS CO LTD) 29. Juli 1997 (1997-07-29)
- PATENT ABSTRACTS OF JAPAN Bd. 0165, Nr. 44 (C-1004), 13. November 1992 (1992-11-13) & JP 4 202848 A (AGENCY OF IND SCIENCE & TECHNOL), 23. Juli 1992 (1992-07-23) -& JP 04 202848 A (AGENCY OF IND SCIENCE & TECHNOL) 23. Juli 1992 (1992-07-23)

## Beschreibung

Gegenstand der vorliegenden Erfindung sind Oberflächen mit hydrophilen Eigenschaften ein Verfahren zur Herstellung solcher Oberflächen sowie deren Verwendung.

Aus der Oberflächentechnik sind verschiedene Verfahren zur Behandlung von Oberflächen bekannt, die diese Oberflächen schmutz- und wasserabweisend ausrüsten. So ist z. B. bekannt, dass zum Erzielen einer guten Selbstreinigung einer Oberfläche die Oberfläche neben einer sehr hydrophoben Oberfläche auch eine gewisse Rauhigkeit aufweisen muss. Eine geeignete Kombination aus Struktur und Hydrophobie macht es möglich, dass schon geringe Mengen bewegten Wassers auf der Oberfläche haftende Schmutzpartikel mitnehmen und die Oberfläche reinigen (WO 96/04123; US 3 354 022). Der sogenannte Lotus-Effekt nutzt hierbei die Eigenschaften von hydrophoben und strukturierten Oberflächen, dass Wasser von diesen extrem gut abperlt.

Die hydrophoben Oberflächen haben aber den Nachteil, dass bei genügend komplizierten Strukturen, wie z. B. Formkörper mit Hinterschneidungen oder poröse Formkörper, wie z. B. Schwämme, Wasser nicht mehr in diese Hohlräume eindringen kann und deshalb keine Reinigung stattfinden kann. Die Kugelform der Wassertropfen auf solchen Oberflächen kann außerdem zu optischen Beeinträchtigungen führen, wenn die Tropfen von der Oberfläche nicht abrollt, weil die Oberfläche beispielsweise waagerecht liegt. In solchen Fällen sind gut benetzbare Oberflächen vorteilhaft, da bei diesen ein Wassertropfen sich über nahezu die gesamte Oberfläche verteilt und einen möglichst dünnen Film bildet. Dies wird insbesondere dann erzielt, wenn die Oberflächenspannung des Wassers durch geeignete Mittel, wie z. B. Tenside herabgesetzt wird und/oder eine hydrophile Oberfläche vorliegt.

Zum Schutz der Umwelt ist es erstrebenswert, den Gebrauch von Tensiden immer weiter zu senken. Die hydrophilen Oberflächen können durch eine Vielzahl von Verfahren hergestellt werden. Ein besonders häufig verwendetes Verfahren ist die Behandlung der Oberfläche von Polymeren mit einem Plasma. Hierbei können sowohl Mikrowellen- wie auch Niederdruckplasmen verwendet werden. Je nach verwendetem Arbeitsgas können unterschiedliche Effekte erzeugt werden. Für die Erzeugung von hydrophilen Oberflächen eigenen sich besonders gut Sauerstoffplasmen, CO₂-Plasmen, NO- und NO₂-Plasmen. Bei der Verwendung von Sauerstoff werden die Polymeroberflächen so modifiziert, dass sie funktionelle Gruppen wie Hydroxyl-, Carbonyl-, Carboxyl- und Peroxogruppen bilden. Die Verwendung von Stickstoff und Ammoniak fordert die Bildung von Amin- und Iminfunktionen. Diese polaren, hydrophilen Gruppen ändern die chemischen Eigenschaften drastisch und verbessern die Benetzbarkeit solcher Oberflächen. Solche hydrophilen Oberflächen weisen Randwinkel von wenigen Grad auf.

Die Plasmaverfahren sind allerdings aufwändig und können nur bei polymeren Oberflächen eingesetzt werden. Außerdem ist die Stabilität der herstellbaren hydrophilen Oberfläche nicht sehr hoch. Es war deshalb Aufgabe der vorliegenden Erfindung Oberflächen mit hydrophilen Eigenschaften sowie ein Verfahren zu deren Herstellung bereitzustellen, wobei auf den Einsatz von Plasmen verzichtet werden sollte und die Einschränkung auf bestimmte Oberflächenmaterialien ebenfalls vermieden werden sollte.

Dokument WO 93/08236 beschreibt Gegenstände, deren Oberfläche mit hydrophilen Klieselsäurepartikeln bedeckt ist. Die hydrophilen Kieselsäurepartikel werden zusammen mit einem vernetzbaren Polysiloxan, Silicafüller, einem Katalysator und Lösungsmittel als Dispersion aufgebracht. Das Lösungsmittel wird durch anschließendes Erhitzen entfernt und das Trägermaterial vernetzt und härtet aus.

Überraschenderweise wurde gefunden, dass sich Oberflächen mit hydrophilen Eigenschaften sehr einfach herstellen lassen, wenn auf diese Oberflächen hydrophile Partikel aufgebracht werden und diese anschließend fixiert werden. Die Fixierung kann dabei auf sehr unterschiedliche Weise erfolgen, z. B. durch Verwendung von Klebern oder ähnlichem als Träger, durch einfaches Ausnutzen von Adhäsionskräften oder durch Anlösen oder Quellen der Oberfläche, Einlagern der Partikel und anschließendes Härten der Oberfläche.

Gemäß der vorliegenden Erfindung werden Oberflächen mit hydrophilen Eigenschaften hergestellt, welche Partikel mit hydrophilen Eigenschaften aufweisen.

Gegenstand der vorliegenden Erfindung ist ein Verfahren zur Herstellung von Oberflächen mit hydrophilen Eigenschaften, welches dadurch gekennzeichnet ist, dass Partikel, die hydrophile Eigenschaften aufweisen, auf eine Oberfläche aufgebracht und dort fixiert werden, wobei die hydrophilen Partikel durch Aufbringen einer Suspension, die hydrophile Partikel in einem Lösemittel aufweist, aufgebracht werden und durch anschließendes Entfernen des Lösemittels fixiert werden und die Oberfläche des Gegenstandes durch das Lösemittel angelöst oder gequellt wird, und nach dem Entfernen des Lösemittels die Partikel in der Oberfläche des Gegenstandes verankert ist.

Mit der vorliegenden Erfindung können Reinigungstextilien und Fasern, die auf zumindest einer Oberfläche eine erfindungsgemäße Oberfläche mit hydrophilen Eigenschaften aufweisen sowie Textilien, die solche Fasern aufweisen, hergestellt werden.

Erfindungsgemäße Oberflächen haben den Vorteil, dass sie auch ohne den Zusatz von Tensiden zu Wasser von Wasser sehr einfach benetzt werden können. Dies ist insbesondere bei Reinigungstextilien, -schwämmen oder -schäumen von Vorteil, da eine einfache Benetzung die Aufnahme von Wasser in diese Reinigungshilfsmittel deutlich erleichtert und auch vergrößert wird.

Die erfindungsgemäß hergestellten Oberflächen lassen sich sehr einfach herstellen. Insbesondere ist es auch möglich sehr komplizierte dreidimensionale Gegenstände mit hydrophilen Oberflächen auszustatten

Das erfindungsgemäße Verfahren sowie die erfindungsgemäß hergestellten Oberflächen werden nachfolgend beispielhaft beschrieben, ohne dass die Erfindung auf diese beschränkt sein soll.

Die erfindungsgemäß hergestellten Oberflächen mit hydrophilen Eigenschaften, zeichnen sich dadurch aus, dass sie Partikel mit hydrophilen Eigenschaften aufweisen. Diese Partikel sind vorzugsweise hydrophile Kieselsäurepartikel. Damit die hydrophilen Eigenschaften der Oberflächen zur Wirkung kommen, weisen diese vorzugsweise so viele Partikel auf, dass 10 bis 100 %, vorzugsweise 50 bis 95 % und ganz besonders bevorzugt 75 bis 85 % der Oberfläche durch die hydrophilen Partikel gebildet werden.

Die Oberflächen selbst können die Oberflächen von Gegenständen aus Metallen, Kunststoffen, Polymeren, Holz, Keramik oder Glas sein. Die Oberflächen können insbesondere auch mit Kunststoffen oder Polymeren beschichtete Oberflächen aus Metall, Holz, Keramik oder Glas sein.

Besonders bevorzugt liegen die hydrophilen Partikel in Form von Primärpartikeln mit einer mittleren Partikelgröße von 1 nm bis 20 µm, vorzugsweise von 5 nm bis 5 µm und ganz besonders bevorzugt von 12 nm bis 1 µm vor. Diese Primärpartikel können auch als Agglomerate oder Aggregate vorliegen, wobei diese Aggregate bzw. Agglomerate Partikelgrößen von 20 nm bis 100 µm aufweisen. Gemäß DIN 53 206 werden unter Aggregaten flächig oder kantenförmig aneinander gelagerte Primärteilchen (Partikel) und unter Agglomeraten punktförmig aneinander gelagerte Primärteilchen (Partikel) verstanden. Besonders bevorzugt werden hydrophile Partikel mit einer BET-Oberfläche von 50 bis 600m²/g eingesetzt. Ganz besonders bevorzugt werden Partikel eingesetzt, die eine BET-Oberfläche von 50 bis 380 m²/g aufweisen.

Erfindungsgemäß verwendbare hydrophile Kieselsäuren werden z. B. durch die Firma Cabot unter dem Namen CAP-O-Sil vertrieben. Erfindungsgemäß hergestellte Oberflächen können z. B. die Typen LM 150, M-5, H-5, EH-5, M-7D aufweisen. Diese hydrophilen Kieselsäuren der Firma Cabot weisen eine BET-Oberfläche von 150 bis 380 m²/g auf. Solche Kieselsäuretypen werden häufig für rheologische Anwendungen genutzt. Ebenfalls gut geeignet sind pyrogene hydrophile Kieselsäuren der Firma Degussa, die als Aerosil-Typen bezeichnet werden. Erfindungsgemäß hergestellte Oberflächen können deshalb auch solche hydrophilen Aerosile aufweisen, wie z. B. Aerosile mit der Bezeichnung Aerosil OX 50,90,130,150,200,300 und/oder 380.

Die hydrophilen Partikel können einfach an der Oberfläche haften, wobei die Haftung chemisch oder physikalisch erfolgen kann. Besonders bevorzugt können die hydrophilen Partikel z. B. mittels eines Trägers an der Oberfläche fixiert sein. Als Träger weisen erfindungsgemäß hergestellte Oberflächen vorzugsweise bekannte Klebstoff- oder Lacksysteme auf. Solche Träger sind z. B. Schmelzkleber, die zumindest eine Verbindung, ausgewählt aus den Ethylen/Ethylacrylat-Copolymeren, EthylenlVinylacetat-Copolymeren, Polyamiden, Polyethersulfonen, Polyisobutenen oder Polyvinylbutyralen aufweisen oder Lacke, die zumindest Mischungen aus einfach und/oder mehrfach ungesättigten Acrylaten und/oder Methacrylaten und/oder Polyurethane aufweisen. Es kann vorteilhaft sein, wenn die verwendete Trägerschicht eine Dicke aufweist, die die Hälfte der mittleren Primärpartikelgröße der vorhandenen Partikel nicht überschreitet.

Ebenso ist es aber möglich, dass die hydrophilen Partikel in der Oberfläche verankert sind. Bei dieser Art der Fixierung der Partikel sind die Partikel zumindest teilweise in die Oberfläche eingelassen. Eine solche Art der Fixierung gelingt nur bei Oberflächen oder Oberflächenbeschichtungen aus Polymeren bzw. Kunststoffen.

Die Oberflächen werden vorzugsweise durch das erfindungsgemäße Verfahren zur Herstellung von Oberflächen mit hydrophilen Eigenschaften hergestellt. Dieses zeichnet sich dadurch aus, dass hydrophile Partikel auf eine Oberfläche aufgebracht werden und dort fixiert werden.

Besonders bevorzugt eingesetzte hydrophile Partikel weisen eine mittlere Partikelgröße der Primärpartikel von 1 nm bis 20 µm, vorzugsweise von 5 nm bis 5 µm und ganz besonders bevorzugt von 12 nm bis 1 µm auf. Diese Primärpartikel können auch als Agglomerate oder Aggregate vorliegen, wobei diese Aggregate bzw. Agglomerate Partikelgrößen von 20 nm bis 100 µm aufweisen. Gemäß DIN 53 206 werden unter Aggregaten flächig oder kantenförmig aneinander gelagerte Primärteilchen (Partikel) und unter Agglomeraten punktförmig aneinander gelagerte Primärteilchen (Partikel) verstanden. Besonders bevorzugt werden hydrophobe Partikel mit einer BET-Oberfläche von 50 bis 600 m²/g eingesetzt. Ganz besonders bevorzugt werden Partikel eingesetzt, die eine BET-Oberfläche von 50 bis 380 m²/g aufweisen.

Vorzugsweise werden in dem erfindungsgemäßen Verfahren hydrophile Kieselsäuren als hydrophile Partikel eingesetzt. Erfindungsgemäße hydrophile Kieselsäuren werden z. B. durch die Firma Cabot unter dem Namen CAP-O-Sil vertrieben. In dem erfindungsgemäßen Verfahren können insbesondere z. B. die Typen CAP-O-Sil LM 150, M-5, H-5, EH-5 und/oder M-7D eingesetzt werden. Diese hydrophilen Kieselsäuren der Firma Cabot weisen eine BET-Oberfläche von 150 bis 380 m²/g auf. Solche Kieselsäuretypen werden häufig für rheologische Anwendungen genutzt. Ebenfalls gut geeignet sind pyrogene hydrophile Kieselsäuren der Firma Degussa, die als Aerosil-Typen bezeichnet werden. In dem erfindungsgemäßen Verfahren können insbesondere hydrophile Aerosile eingesetzt werden, wie z. B. die Aerosile mit der Bezeichnung Aerosil OX 50, 90, 130,150, 200, 300 und/oder 380.

In einer Ausführungsart des erfindungsgemäßen Verfahrens werden die hydrophilen Partikel durch Aufbringen einer Suspension, die hydrophile Partikel in einem Lösemittel aufweist, und anschließendes Entfernen des Lösemittels auf die Oberfläche aufgebracht und fixiert. Das Aufbringen der Suspension auf zumindest eine Oberfläche eines Gegenstandes kann z. B. durch Tauchen des Gegenstandes in die Suspension oder durch Aufsprühen, Aufstreichen oder Aufrakeln der Suspension auf den Gegenstand erfolgen. Es kann vorteilhaft sein, wenn die Suspension ein in dem Lösemittel gelöstes Polymer aufweist. Vorzugsweise weist das Lösemittel weniger als 10 Gew.-% an gelöstem Polymer, vorzugsweise von 0,1 bis 5 Gew.-%, und ganz besonders bevorzugt von 0,5 bis 2,5 Gew.-% an gelöstem Polymer auf.

Die Suspension kann auf eine dem Fachmann bekannte Weise z. B. durch einfaches Einmischen der Kieselsäure in das Lösemittel erfolgen. Die erfindungsgemäß verwendete Suspension weist vorzugsweise von 0,1 bis 50 Gew.-%, bevorzugt von 0,5 bis 25 Gew.-%, besonders bevorzugt von 0,5 bis 5 Gew.-%, von 5 bis 10 Gew.-%, von 10 bis 15 Gew.-%, von 15 bis 20 Gew.-% oder von 20 bis 25 Gew.-% und ganz besonders bevorzugt von 1 bis 2,5 Gew.-% hydrophile Partikel in Bezug auf das Lösemittel in dem Lösemittel auf.

Ist in der Suspension ein gelöstes Polymer enthalten, so können die Partikel durch einen sich ausbildenden dünnen Polymerfilm an der Oberfläche fixiert sein, wobei sich der Polymerfilm durch das Entfernen des Lösemittels ausbildet.

Als Lösemittel kann zumindest eine geeignete Verbindung, die die Oberfläche des zu beschichtenden Gegenstands nicht anlöst, aus der Gruppe der Alkohole, der Glykole, der Ether, der Glykolether, der Ketone, der Amide, der Nitro-Verbindungen, der Halogenkohlenwasserstoffe oder eine Mischung davon eingesetzt werden. Je nach zu behandelnder Oberfläche und in der Suspension zu lösendem Polymer muss ein geeignetes Lösemittel gewählt werden.

Für eine Oberfläche aus Metall, Glas, Keramik oder Holz eignet sich z. B. Tetrahydrofuran als Lösemittel. Dieses kann z. B. Polystyrol als gelöstes Polymer enthalten. Auch für Oberflächen aus Kunststoff lassen sich geeignete Materialkombinationen finden. So können z. B.

Kunststoffoberflächen aus Hochdruckpolyethylen (LDPE) ebenfalls mit einer Suspension behandelt werden, die Tetrahydrofuran als Lösemittel aufweisen. Auch in diesem Fall kann die Suspension wiederum Polystyrol als gelöstes Polymer aufweisen. Polyvinyl-chloridoberDächen sind Suspensionen mit Cyclohexanon als Lösemittel zugänglich.

In dem erfindungsgemäßen Verfahrens wird die Oberfläche des Gegenstandes durch das Lösemittel angelöst oder gequellt, und nach dem Entfernen des Lösemittels sind die Partikel in der Oberfläche des Gegenstandes verankert.

Oberflächen, die angelöst oder gequellt werden können, weisen beispielsweise Polymere auf der Basis von Polycarbonaten, Poly(meth)acrylaten, Polyamiden, PVC, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten sowie deren Gemische oder Copolymere, auf. Die Oberfläche der Formkörper aus den genannten Polymeren kann inhärent vorhanden sein, wenn der Formkörper ganz aus diesem Material gefertigt wurde. Die Polymeren können aber auch als Beschichtung auf andere Materialien aufgebracht werden. So können z. B. auch Formkörper aus Glas oder Metall mit einer ganz oder teilweise mit einer Oberfläche aus einem der genannten Polymere ausgerüstet werden, z. B. durch Tauchen in eine Polymerschmelze und anschließendes Erstarren der Schmelze oder durch Aufbringen eines reaktiven Polymerklebers oder Pulverlackes und Verfestigen des Klebers / Lackes auf dem Formkörper.

Als Lösemittel oder Quellmittel für die entsprechende Oberfläche geeignete Verbindung werden vorzugsweise solche eingesetzt, die ausgewählt sind aus der Gruppe der Alkohole, der Glykole, der Ether, der Glykolether, der Ketone, der Amide, der Nitro-Verbindungen, der Halogenkohlenwasserstoffe oder Mischungen davon.

Als Lösemittel für die entsprechenden Oberfläche besonders geeignete Lösemittel sind vorzugsweise Verbindungen ausgewählt aus Methanol, Ethanol, Propanol, Butanol, Octanol, Cyclohexanol, Phenol, Kresol, Ethylenglykol, Diethylenglykol, Dioxan, Dioxolan, Tetrahydrofuran, Monoethylenglykolether, Diethylenglykolether, Triethylenglykolether, Polyethylenglykolether, Aceton, Butanon, Cyclohexanon, Glykolester, Dimethylformamid, Pyridin, N-Methylpyrrolidon, N-Methylcaprolacton, Acetonitril, Dimethylsulfoxid, Sulfolan, Nitrobenzol, Dichlormethan, Chloroform, Tetrachlormethan, Trichlorethen, Tetrachlorethen, 1,2-Dichlorethan, Chlorphenol oder Chlorfluorkohlenwasserstoffe, oder Mischungen davon.

Beim Anlösen der Oberfläche bildet sich an der Oberfläche eine flüssige Zone mit einem hohem Anteil an gelöstem Polymer. Partikel, die sich in dieser Zone an der Oberfläche anlagern, werden beim Entfernen des Lösemittels durch das erstarrende (ausfallende) Polymer an der Oberfläche fixiert. Auch bei dieser Ausführungsvariante des erfindungsgemäßen Verfahrens kann es vorteilhaft sein, wenn die Suspension ein gelöstes Polymer aufweist. Besonders bevorzugt ist es, wenn das gelöste Polymer und das Polymer der Oberfläche gleichartig sind.

Bei dieser Ausführungsart des Verfahrens ist insbesondere darauf zu achten, dass die Suspension nicht zu lange auf die Oberfläche einwirkt, um eine tiefergehende Beschädigung der Oberfläche zu vermeiden. Die erfindungsgemäße Behandlung der Oberfläche erfolgt bei dieser Variante des erfindungsgemäßen Verfahrens vorzugsweise durch Eintauchen des Gegenstandes /der Oberfläche in das Lösemittel, welches die Partikel aufweist. Die Dauer des Eintauchens ist von der Lösegeschwindigkeit des Polymers in dem Lösemittel abhängig, beträgt aber vorzugsweise weniger als 5 Minuten, vorzugsweise von 1 Sekunde bis 5 Minuten, besonders bevorzugt von 1 bis 20 Sekunden, von 20 Sekunden bis 1,5 Minuten oder von 1,5 bis 2 Minuten. Ganz besonders bevorzugt beträgt das Eintauchen der Oberfläche in das Lösemittel von 5 bis 15 Sekunden. Nach dem Eintauchen der Gegenstände in das Lösemittel werden diese aus dem Lösemittel entfernt und getrocknet.

Eine Verfahrensvariante stellt das Quellen der Oberflächen dar. Geeignete Quellmittel lösen eine Polymeroberfläche nicht auf. Vielmehr wird durch Einlagerung von Lösemittelmolekülen die Oberfläche im strengen Sinne undefiniert, sie weicht auf. Dies ermöglicht, dass außer den Lösemittelmolekülen noch Partikel, wie sie in dieser Anmeldung beansprucht werden, ebenfalls, zumindest teilweise, in die Oberfläche eindringen können. Als Quellmittel sind deshalb Verbindungen einzusetzen, die schlechte Lösemittel in Bezug auf den zu behandelnden Kunststoff sind, damit diese zum Lösen deutlich mehr Zeit benötigen als gute Lösemittel, aber auch Lösemittel, deren Lösepotential durch die Zugabe von Nichtlösemittel herabgesetzt wurde. Auf diese Weise wird erreicht, dass makroskopisch nur ein Quellen der obersten Polymerschichten stattfindet. Außerdem wird auf diese Weise erreicht, dass ein ganz oder teilweises Ablösen der Kunststoff- bzw. Polymeroberfläche vermieden wird.

Ein anderer Weg, geeignete Quellmittel zu erhalten, kann darin bestehen, Nichtlösemittel zu mischen. So ist beispielsweise ataktisches Polystyrol weder in Aceton noch in Cyclohexan löslich. Mischt man aber diese beiden Nichtlösemittel, so kommt man schnell zu Mischungsverhältnissen, bei denen Polystyrol quillt. Es sind sogar Mischungsbereiche zugänglich, in denen ataktisches Polystyrol gelöst wird.

Nach Beendigung des Quellprozesses oder des Quellvorganges und anschließender Trocknung sind die Partikel, die die Oberflächenstrukturen aus Erhebungen bilden, fest in die dem Quellmittel zugänglichen oberen Polymerschichten eingelagert. Durch das anschließende Entfernen des Quellmittels wird der Prozess des Quellens rückgängig gemacht und die Partikel sind in der Kunststoffoberfläche fest verankert. Das Quellen der Oberflächen ist folglich ein unabdingbares Merkmal des erfindungsgemäßen Verfahrens zur Herstellung von Formkörpern mit trägerschichtfreien selbstreinigenden Oberflächen.

Als Quellmittel kann zumindest eine als Quellmittel für die entsprechende Oberfläche geeignete Verbindung ausgewählt aus der Gruppe der Alkohole, der Glykole, der Ether, der Glykolether, der Ketone, der Amide, der Nitro-Verbindungen oder der Halogenkohlenwasserstoffe oder Mischungen davon eingesetzt werden. Ebenso ist es möglich, Mischungen der genannten Quellmittel mit hydrophoben Lösemitteln wie aliphatischen Kohlenwasserstoffen, einzusetzen. Vorzugsweise als Quellmittel zumindest eine als Quellmittel für die entsprechende Oberfläche geeignete Verbindung ausgewählt aus Methanol, Ethanol, Propanol, Butanol, Octanol, Cyclohexanol, Phenol, Kresol, Ethylenglykol, Diethylenglykol, Dioxan, Dioxolan, Tetrahydrofuran, Mono-ethylenglykolether, Diethylenglykolether, Triethylenglykolether, Polyethylenglykolether, Aceton, Butanon, Cyclohexanon, Glykolester, Dimethylformamid, Pyridin, N-Methylpyrrolidon, N-Methylcaprolacton, Acetonitril, Dimethylsulfoxid, Sulfolan, Nitrobenzol, Dichlormethan, Chloroform, Tetrachlormethan, Trichlorethen, Tetrachlorethen, 1,2-Dichlorethan, Chlor-phenol und Chlorfluorkohlenwasserstoffe oder Mischungen davon oder Mischungen dieser Quellmittel mit einer Verbindung, ausgewählt aus Benzinen, Petrolether, Cyclohexan, Methylcyclohexan, Decalin, Tetralin, Terpene, Benzol, Toluol und Xylol eingesetzt werden.

Für amorphe Polymere kann ein Quellmittel anhand der Löslichkeitsparameter für das Polymere und den Löslichkeitsparametern der Lösemittel abgeschätzt werden. In Makromoleküle, Hüthig & Wepf Verlag Basel-Heidelberg-New York von Hans-Georg Elias (1981) sind Löslichkeitsparameter tabelliert. Eine Abschätzungshilfe für das Lösen ist gegeben. Im Grenzbereich zwischen Lösen und Nichtlösen ist die Quellung angesiedelt. Um Quellmittel für kristalline oder teilkristalline Polymere bei Temperaturen unterhalb des Kristallitschmelzpunktes zu ermitteln, kann das Konzept der Löslichkeitsparameter nicht angewandt werden. Hier können einfache Experimente, die sowohl auf der Lösemittelgüte als auch auf dem Temperatureinfluss basieren zur Bestimmung des Quellmittels dienen.

Die nachfolgende Tabelle gibt beispielhaft einige Quellmittel-Polymer-Kombinationen an, die geeignet sind gemäß dem erfindungsgemäßen Verfahren eingesetzt zu werden. Dem Fachmann ergeben sich leicht weitere Kombinationen.

| **Quellmittel** | **Polymer** |
|---|---|
| Tetrahydrofuran : Ethanol 60 : 40 (Gew.-%) | Polystyrol |
| Decalin : N-Methylpyrrolidon 90 : 10 (Gew.-%) | Polyethylen |
| Decalin : Cyclohexanon 50 : 50 (Gew.-%) | Polyethylen |
| Decalin : Cyclohexanon 50 : 50 (Gew.-%) | Polypropylen |
| Decalin : Tetrahydrofuran 50 : 50 (Gew.-%) | Polypropylen |
| Decalin : N-Methylpyrrolidon 90 : 10 (Gew.-%) | Polypropylen |
| Cyclohexanon : Ethanol 20 : 80 (Gew.-%) | Polyvinylchlorid |
| Cyclohexanon : Tetrahydrofuran 20 : 80 (Gew.-%) | Polyvinylchlorid |

Durch einfaches Testen ergeben sich dem Fachmann die geeigneten Quellmittel in Abhängigkeit des verwendeten Polymermaterials.

In allen diesen Ausführungsvarianten des erfindungsgemäßen Verfahrens kann es vorteilhaft sein, wenn die Suspension bzw. das Lösemittel, welches die hydrophilen Partikel aufweist, vor dem Aufbringen auf die Oberfläche eine Temperatur von - 30 °C bis 150 °C, bevorzugt 25 bis 100 °C und ganz besonders bevorzugt von 25 bis 49 °C, von 50 bis 85 °C oder von 86 bis 100 °C aufweist.

Das Entfernen des Lösemittels bzw. das Trocknen kann bei Raumtemperatur oder erhöhter Temperatur erfolgen. Vorzugsweise erfolgt das Trocknen bzw. das Entfernen des Lösemittels eine thermische Behandlung bei einer Temperatur von 30 bis 70 °C, vorzugsweise von 40 bis 60 °C.

In einer weiteren Verfahrensvariante erfolgt die Fixierung der Partikel an der Oberfläche durch ein erfindungsgemäßes Verfahren, welches die Schritte
a) Aufbringen einer flüssigen oder pastösen, härtbaren Substanz als Träger auf eine Oberfläche,
b) Aufbringen von hydrophilen Partikeln auf den Träger und
c) Fixieren der Partikel durch Härten des Trägers,
aufweist.

Das Aufbringen der härtbaren Substanz kann z. B. durch Aufsprühen, Aufrakeln, Aufstreichen oder Aufspritzen erfolgen. Vorzugsweise wird die härtbare Substanz in einer Dicke von 1 bis 100 µm, vorzugsweise in einer Dicke von 5 bis 50 µm aufgebracht. Je nach Viskosität der härtbaren Substanz kann es vorteilhaft sein, die Substanz vor dem Aufbringen der Partikel anhärten bzw. antrocknen zu lassen. Idealerweise wird die Viskosität der härtbaren Substanz so gewählt, dass die aufgebrachten Partikel zumindest teilweise in die härtbare Substanz einsinken können, die härtbare Substanz bzw. die auf ihr aufgebrachten Partikel aber nicht mehr verlaufen, wenn die Oberfläche senkrecht gestellt wird.

Das Aufbringen der hydrophilen Partikel kann durch gängige Verfahren wie Aufsprühen oder Bepudern erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an der härtbaren Substanz haften, durch Schütteln, Abbürsten oder Abblasen von der Oberfläche entfernt werden. Diese Partikel können gesammelt und wiedereingesetzt werden.

Als härtbare Substanz kann als Träger ein Lack, der zumindest Mischungen aus einfach und/oder mehrfach ungesättigten Acrylaten und/oder Methacrylaten aufweist, eingesetzt werden. Die Mischungsverhältnisse können in weiten Grenzen variiert werden. Besonders bevorzugt wird ein mittels thermischer oder chemischer Energie und/oder Lichtenergie härtbarer Lack eingesetzt.

Als härtbare Substanz wird vorzugsweise ein Lack oder ein Lacksystem ausgewählt, das überwiegend hydrophobe Eigenschaften aufweist.

Es kann vorteilhaft sein, wenn die als Lack eingesetzten Mischungen Verbindungen mit funktionellen Gruppen, wie z. B. Hydroxy-Gruppen, Epoxid-Gruppen oder Amin-Gruppen, wie z. B. Beispiel 2,3-Epoxypropyl-methacrylat oder 2-Hydroxyethylacrylat aufweist. Dies ist insbesondere dann vorteilhaft, wenn die Verträglichkeit (in Bezug auf die hydrophilen Eigenschaften) von Lack und hydrophilen Partikeln wie beispielsweise von Aerosil 200 mittels hydrophilen Lackbestandteilen aufeinander abgestimmt werden. Als härtbare Substanzen können nicht nur Lacke auf Acrylharz-Basis eingesetzt werden, sondern auch Lacke auf Polyurethan-Basis oder aber Polyurethanacrylate oder Siliconacrylate. Ebenfalls sind als härtbare Substanzen Zweikomponentenlacksysteme oder andere reaktive Lacksysteme einsetzbar. Es kann vorteilhaft sein, wenn der Träger selbst, also das Lack- oder Klebersystem hydrophile Partikel aufweist.

Das Fixieren der Partikel auf dem Träger erfolgt durch Härten des Trägers, wobei dieses, je nach verwendetem Lacksystem, vorzugsweise durch thermische und/oder chemische Energie und/oder Lichtenergie erfolgt. Das Härten des Trägers, ausgelöst durch chemische oder thermische Energie und/oder Lichtenergie, kann z. B. durch Polymerisation oder Vernetzung der Bestandteile der Lacke bzw. Lacksysteme erfolgen. Besonders bevorzugt erfolgt das Härten des Trägers durch Lichtenergie und ganz besonders bevorzugt erfolgt das Polymerisieren des Trägers durch Licht einer Hg-Mitteldrucklampe im UV-Bereich. Vorzugsweise erfolgt das Härten des Trägers unter einer Inertgas-Atmosphäre, ganz besonders bevorzugt unter einer Stickstoffatmosphäre.

Je nach Dicke der aufgebrachten härtbaren Substanz und Durchmesser der verwendeten Partikel kann es notwendig sein, die Zeit, die zwischen Aufbringen der Partikel und Härten der härtbaren Substanz verstreicht, zu begrenzen, um ein vollständiges Eintauchen der Partikel in die härtbare Substanz zu vermeiden. Vorzugsweise wird die härtbare Substanz innerhalb von 0,1 bis 10 min, vorzugsweise innerhalb von 1 bis 5 min nach dem Aufbringen der Partikel gehärtet.

In einer Variante dieser Ausführungsart des erfindungsgemäßen Verfahrens besteht das Trägersystem aus Fixiermittelpartikeln, die als feste Partikel vorliegen. Diese werden an- bzw. aufgeschmolzen und die hydrophilen Partikel werden beim härten bzw. verfestigen des angeschmolzenen Trägers an der Oberfläche fixiert. Diese Verfahrensvariante umfasst deshalb vorzugsweise die Schritte:
I) Aufbringen von Fixiermittelpartikeln und strukturbildenden Partikeln, auf eine Oberfläche und
II) Anschmelzen der Fixiermittelpartikel und anschließendes Erstarren des aus den Fixiermittelpartikeln gebildeten Trägers zur Fixierung der strukturbildenden Partikel und des Trägers auf der Oberfläche.

Das Aufbringen der Fixiermittelpartikel und der hydrophilen Partikel kann nacheinander oder zeitgleich erfolgen. Üblicherweise werden zuerst die Fixiermittelpartikel und anschließend die hydrophilen Partikel auf die Oberfläche aufgebracht. Es kann vorteilhaft sein, die Fixiermittelpartikel auf der Oberfläche vor dem Aufbringen der strukturbildenden Partikel anzuschmelzen, wobei unter Anschmelzen (oder auch Ansintern) das Zusammenkleben von Fixiermittelpartikeln an ihren Berührungspunkten zu verstehen ist.

In einer besonders bevorzugten Ausführungsart des erfindungsgemäßen Verfahrens wird eine Mischung von Fixiermittelpartikeln und strukturbildenden Partikeln hergestellt, die dann auf die Oberfläche aufgebracht wird. Zur Herstellung der Mischung aus strukturbildenden Partikeln und Fixiermittelpartikeln werden vorzugsweise strukturbildende Partikel eingesetzt, die in ihren hydrophilen Eigenschaften den Eigenschaften der Fixiermittelpartikel ähnlich sind.

Das Aufbringen der Partikel auf die Oberfläche kann auf eine dem Fachmann bekannte Weise z. B. durch Aufsprühen oder Aufpudern erfolgen. Die Oberfläche kann, je nach Verwendung des mit einer hydrophile Eigenschaften aufweisenden Oberfläche zu versehenden Gegenstandes, bereits Korrosionsschutz-, Farb- oder Warnbeschichtungen aufweisen. Die Oberfläche bzw. der Gegenstand kann wiederum alle erdenklichen Materialien wie z. B. Polymere, Kunststoffe, Metalle, Hölzer, Naturstoffe, Keramiken oder Gläser umfassen. Der Einsatz wird nur durch die Wärmebeständigkeit der Gegenstände bzw. Oberflächen beschränkt. Gemäß dieser Ausführungsart des erfindungsgemäßen Verfahrens zu behandelnde Gegenstände müssen deshalb im Bereich der Schmelztemperatur der Fixierpartikel thermisch stabil sein.

Das erfindungsgemäße Anschmelzen erfolgt durch kurzzeitiges Erwärmen, wobei unter Anschmelzen (oder auch Ansintern) ein Erweichen der Fixiermittelpartikel der Gestalt verstanden werden soll, dass die Oberfläche der Fixiermittelpartikel mit benachbarten Oberflächen von Fixiermittelpartikeln und/oder hydrophilen Partikeln sowie der Oberfläche des Gegenstandes, welche mit einer selbstreinigenden Oberfläche versehen werden soll, nach dem Erkalten zumindest teilweise aneinander haften. Die Haftung kann durch chemische Bindung aber auch durch physikalische Kräfte hergestellt worden sein.

Die Temperatur, bei der das Anschmelzen durchgeführt wird, sowie die Dauer des Anschmelzens wird vorzugsweise so gewählt, dass die Fixiermittelpartikel nur teilweise verschmelzen so dass die hydrophilen Partikel an der Oberfläche erhalten bleiben.

Das Erwärmen kann auf eine dem Fachmann bekannte Weise, z. B. mittels eines Ofens oder einer anderen Wärmequelle erfolgen. Bevorzugt erfolgt das Erwärmen mittels Infrarotstrahlung. Es kann aber auch vorteilhaft sein, eine Mischung aus zumindest Fixiermittelpartikeln und hydrophilen Partikeln oder die Fixiermittelpartikel allein auf eine erwärmte Oberfläche aufzubringen, die nach dem Aufbringen abgekühlt wird. Dies kann insbesondere dann vorteilhaft sein, wenn die Oberfläche des Gegenstandes selbst der Gestalt ist, dass die aufgebrachte Mischung nicht stabil auf dieser Oberfläche verbleibt. Gründe hierfür können z. B. auch in der Geometrie des Gegenstandes zu suchen sein, oder aber in einer ungenügenden Adhäsion der pulverförmigen Beschichtungsmittel (Fixiermittelpartikel oder hydrophilen Partikel) zum Substrat.

Die in der bevorzugten Ausführungsart eingesetzte Mischung, die zumindest Fixiermittelpartikel und hydrophilen Partikel umfasst, weist vorzugsweise von 10 bis 90 Gew.-% hydrophile Partikel und von 90 bis 10 Gew.-% Fixiermittelpartikel auf. Ganz besonders bevorzugt weist die eingesetzte Mischung 25 bis 75 Gew.-% hydrophile Partikel und 25 bis 75 Gew.-% Fixiermittelpartikel auf. Die Mischungen können durch einfaches Mischen der Feststoffe hergestellt werden. Zum Mischen können aber auch Mischaggregate eingesetzt werden, die dem Fachmann geläufig sind. Es kann vorteilhaft sein, wenn das Mischen unter Erwärmen erfolgt, wobei die Stromaufnahme des Mischers kontrolliert wird. Bei beginnender Agglomeration, was an einem Anstieg der Stromaufnahme leicht feststellbar ist, wird die Mischung wieder abgekühlt. Durch das leichte Erwärmen sind die hydrophilen Partikel bereits jetzt zumindest teilweise fest an die Fixiermittelpartikel gebunden, ohne dass ein Umschmelzen der hydrophilen Partikel durch das Fixiermittel stattfindet, wodurch die hydrophilen Eigenschaften der hydrophilen Partikel verloren gehen könnten. Der Vorteil des Erwärmens der Partikel beim Mischen liegt darin, dass durch Agglomeration größere Teilchen der genannten Mischung entstehen, die leichter zu Verarbeiten sind, da beim Aufbringen der Mischung auf die Oberfläche durch Aufsprühen oder Aufpudern eine Staubbildung weitestgehend vermieden und eine Entmischung durch mechanische Einflüsse, wie z. B. unterschiedliche Dichten von Fixiermittelpartikeln und hydrophilen Partikeln, nicht mehr stattfinden kann.

Die erfindungsgemäß eingesetzten Fixiermittelpartikel weisen vorzugsweise eine durchschnittliche Größe von kleiner 50 µm auf. Bevorzugt weisen die Fixiermittelpartikel eine durchschnittliche Größe, die der Größe der hydrophilen Partikel entspricht, auf. Es kann aber auch vorteilhaft sein, wenn die Fixiermittelpartikel eine von 10 bis 70 %, vorzugsweise 25 bis 50 % kleinere durchschnittliche Größe als die der hydrophilen Partikel aufweisen.

Die als Fixiermittelpartikel eingesetzten Fixiermittel sind vorzugsweise Verbindungen, ausgewählt aus der Gruppe der Schmelzkleber und/oder Pulverlacke. Diese Schmelzkleber und/oder Pulverlacke weisen vorzugsweise zumindest eine Verbindung, ausgewählt aus den Ethylen/Ethylacrylat-Copolymeren, Ethylen/Vinylacetat-Copolymeren, Polyamiden, Polyethersulfonen, Polyisobutenen, Epoxydharze oder Polyvinylbutyralen auf.

Mittels des erfindungsgemäßen Verfahrens können Gegenstände, die auf zumindest einer Seite bzw. Oberfläche eine erfindungsgemäße Oberfläche aufweisen, hergestellt werden.

Gegenstände, die auf zumindest einer Oberfläche eine erfindungsgemäße Oberfläche mit hydrophilen Eigenschaften aufweist, können z. B. Reinigungstextilien oder Fasern, sein, wobei die Fasern zur Herstellung von Textilien eingesetzt werden können. Insbesondere Reinigungstextilien, die erfindungsgemäße Oberflächen aufweisen oder Fasern mit erfindungsgemäßen Oberflächen aufweisen, zeichnen sich durch eine deutlich besserer Wasseraufnahme aus und zeigen deshalb eine deutlich bessere Handhabung.

Auch Schwämme oder Schäume können an den Außenseiten sowie in den offenen Poren mit den erfindungsgemäßen Oberfläche ausgestattet werden. Diese Schäume oder Schwämme haben als Reinigungshilfsmittel die gleichen Vorteile wie die oben beschriebenen Reinigungstextilien. Weitere Verwendungsmöglichkeiten solcher Schäume oder Schwämme liegen z. B. in der Verwendung dieser als Wasserspeicher, z. B. für Blumengebinde aber auch als Absorber.

Eine weitere Anwendung von hydrophilen Oberflächen findet sich in Einbauten von Destillationskolonnen, Reaktoren oder Entfeuchtern. Durch die gute Benetzbarkeit von Einbauten die erfindungsgemäße hydrophile Oberflächen aufweisen, kommt es zu einer verbesserten Kondensation von Wasserdampf an der Einbauten und damit zu einer höheren Effektivität.

Das erfindungsgemäße Verfahren wird an Hand der Figuren Fig. 1a bis 3b beschrieben, ohne dass die Erfindung darauf beschränkt sein soll. In Fig. 1a und 1b sind rasterelektronenmikroskopische (REM) Aufnahmen einer mit hydrophiler Kieselsäure beschichteten Polycarbonatplatte in unterschiedlicher Vergrößerung abgebildet. Die Figuren Fig. 2a und 2b zeigen REM-Aufnahmen eines Schwammes aus Polyvinylchlorid (PVC) in unterschiedlicher Vergrößerung. In Fig. 2a ist sehr gut die Porenstruktur des Schwammes zu erkennen. Die Figuren 3a und 3b zeigen einen mit hydrophiler Kieselsäure gemäß Beispiel 2 ausgerüsteten PVC-Schwamm in unterschiedlicher Auflösung. Insbesondere in Fig. 3b ist zu erkennen, dass sich die hydrophilen Partikel in die Oberflächen der Poren einlagern.

Das erfindungsgemäße Verfahren wird im folgenden Beispiel beispielhaft beschrieben, ohne dass die Erfindung darauf beschränkt sein soll.

### Beispiel 1:

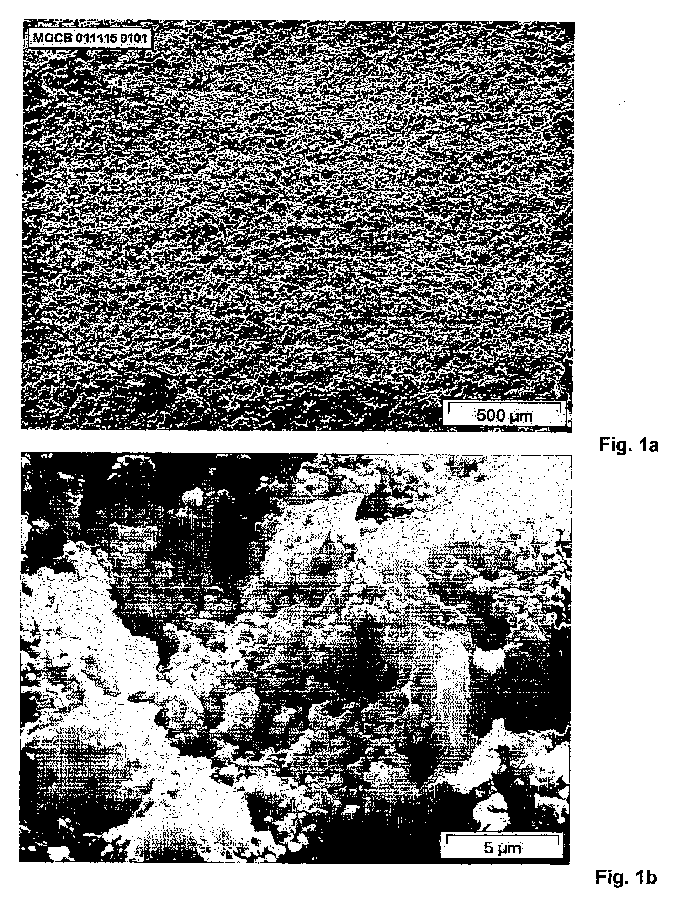

Eine Polycarbonatplatte wird in eine Suspension aus einer hydrophilen Kieselsäure mit einer mittleren Primärpartikelgröße von 12 nm und einer BET Oberfläche von 200 m²/g (Aerosil 200, Degussa AG) und Aceton, die 1 Gew.-% Kieselsäure aufweist, getaucht. Die Primärpartikel lagern sich bei diesem Prozess in die angelöste Polymermatrix ein und sind nach dem Abdampfen des Acetons fest in der Oberfläche verankert. Diese Beschichtung ist wischstabil. Der Randwinkel eines Flüssigkeitstropfens (Wasser) ist auf dieser Oberfläche nicht zu bestimmen, da er sofort spreizt. Fig. 1 a und b zeigen REM-Bilder einer gemäß Beispiel 1 hergestellten Oberfläche in verschiedenen Vergrößerungen.

### Beispiel 2:

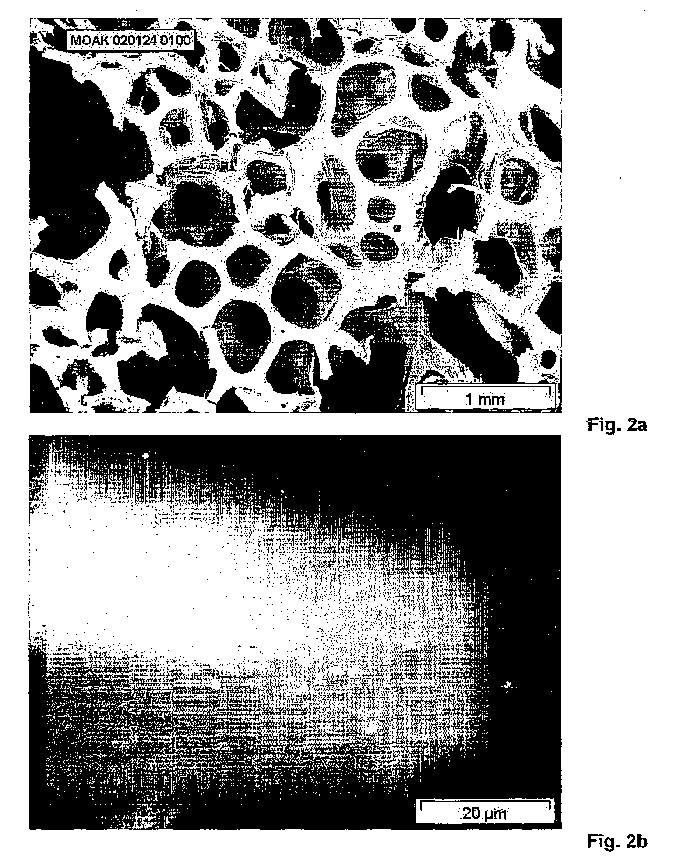

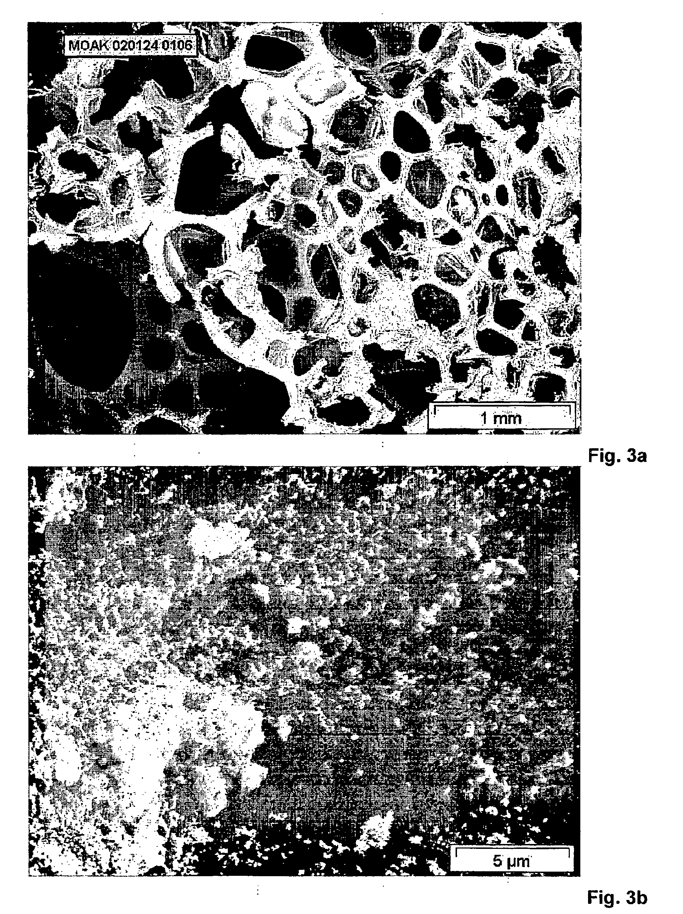

Ein handelsüblicher Schwamm aus PVC (Polyvinylchlorid) wird in eine Suspension aus einer hydrophilen Kieselsäure mit einer mittleren Primärpartikelgröße von 12 nm und einer BET Oberfläche von 200 m²/g (Aerosil 200, Degussa AG) und Hexan, die 1 Gew.-% Kieselsäure aufweist, getaucht. Die Primärpartikel lagern sich bei diesem Prozess in die angelöste Polymermatrix ein und sind nach dem Abdampfen des Hexans fest in der Oberfläche verankert. Fig. 2a und2b zeigen REM-Bilder eines in Beispiel 2 eingesetzten Schwammes. Die Figuren Fig. 3a und 3b zeigen REM-Aufnahmen des gemäß Beispiel 2 behandelten PVC-Schwammes. Es ist gut zu erkennen, dass die Poren nicht durch das Lösemittel zerstört werden und sich in das Polymer die Primärteilchen einlagern.

Im Vergleich zu einem nicht beschichteten Schwamm saugt ein hydrophiler Schwamm sehr viel schneller eine Flüssigkeit auf. Der erfindungsgemäß hergestellte hydrophile Schwamm saugt in 10 s selbständig soviel Wasser auf, dass er vollständig in einem Wasserbad abtaucht. Der unbehandelte handelsübliche Schwamm aus PVC benötigt hierfür über 1,5 Stunden.

## Patentansprüche

1. Verfahren zur Herstellung von Oberflächen mit hydrophilen Eigenschaften,
**dadurch gekennzeichnet,**
**dass** Partikel, die hydrophile Eigenschaften aufweisen, auf eine Oberfläche aufgebracht und dort fixiert werden, wobei die hydrophilen Partikel durch Aufbringen einer Suspension, die hydrophile Partikel in einem Lösemittel aufweist, aufgebracht werden und durch anschließendes Entfernen des Lösemittels fixiert werden und die Oberfläche des Gegenstandes durch das Lösemittel angelöst oder gequellt wird, und nach dem Entfernen des Lösemittels die Partikel in der Oberfläche des Gegenstandes verankert ist.

2. Verfahren gemäß Anspruch 1,
**dadurch gekennzeichnet,**
**dass** das Aufbringen der Suspension auf zumindest eine Oberfläche eines Gegenstandes durch Tauchen des Gegenstandes in die Suspension erfolgt.

3. Verfahren gemäß Anspruch 1,
**dadurch gekennzeichnet,**
**dass** das Aufbringen der Suspension auf zumindest eine Oberfläche eines Gegenstandes durch Aufsprühen der Suspension auf den Gegenstand erfolgt.

4. Verfahren gemäß zumindest einem der Ansprüche 1 bis 3,
**dadurch gekennzeichnet,**
**dass** die Suspension ein in dem Lösemittel gelöstes Polymer aufweist.

5. Verfahren gemäß Anspruch 2,
**dadurch gekennzeichnet,**
**dass** die Oberfläche, die von einem Lösemittel angelöst wird, Polymere auf der Basis von Polycarbonaten, Poly(meth)acrylaten, Polyamiden, PVC, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten sowie deren Gemische oder Copolymere, aufweist.

6. Verfahren nach einem der Ansprüche 2 oder 4,
**dadurch gekennzeichnet,**
**dass** als Lösemittel zumindest eine als Lösemittel für die entsprechende Oberfläche geeignete Verbindung aus der Gruppe der Alkohole, der Glykole, der Ether, der Glykolether, der Ketone, der Amide, der Nitro-Verbindungen, der Halogenkohlenwasserstoffe oder Mischungen davon eingesetzt wird.

7. Verfahren nach Anspruch 6,
**dadurch gekennzeichnet,**
**dass** als Lösemittel zumindest eine als Lösemittel für die entsprechende Oberfläche geeignete Verbindung ausgewählt aus Methanol, Ethanol, Propanol, Butanol, Octanol, Cyclohexanol, Phenol, Kresol, Ethylenglykol, Diethylenglykol, Dioxan, Dioxolan, Tetrahydrofuran, Monoethylenglykolether, Diethylenglykolether, Triethylenglykolether, Polyethylenglykolether, Aceton, Butanon, Cyclohexanon, Dimethylformamid, Pyridin, N-Methylpyrrolidon, N-Methylcaprolacton, Acetonitril, Dimethylsulfoxid, Sulfolan, Nitrobenzol, Dichlormethan, Chloroform, Tetrachlormethan, Trichlorethen, Tetrachlorethen, 1,2-Dichlorethan und Chlorphenol oder Mischungen davon eingesetzt wird.

8. Verfahren gemäß zumindest einem der Ansprüche 1 bis 7,
**dadurch gekennzeichnet,**
**dass** das Lösemittel, welches die hydrophilen Partikel aufweist, vor dem Aufbringen auf die Oberfläche eine Temperatur von - 30 °C bis 150 °C, bevorzugt 25 bis 100 °C, aufweist.

9. Verfahren gemäß Anspruch 1,
**dadurch gekennzeichnet,**
**dass** es die Schritte
a) Aufbringen einer härtbaren Substanz als Träger auf eine Oberfläche,
b) Aufbringen von hydrophilen Partikeln auf den Träger und
c) Fixieren der Partikel durch Härten des Trägers,
aufweist.

10. Verfahren gemäß Anspruch 9,
**dadurch gekennzeichnet,**
**dass** das Härten des Trägers durch thermische Energie und/oder Lichtenergie erfolgt

11. Verfahren gemäß Anspruch 9 oder 10,
**dadurch gekennzeichnet,**
**dass** als härtbarer Träger ein Lack, der zumindest Mischungen aus einfach und/oder mehrfach ungesättigten Acrylaten und/oder Methacrylaten und/oder Polyurethane aufweist, oder ein Schmelzkleber, der zumindest eine Verbindung, ausgewählt aus den Ethylen/Ethylaarylat-Copolymeren, Ethylen/Vinylacetat-Copolymeren, Polyamiden, Polyethersulfonen, Polyisobutenen oder Polyvinylbutyralen aufweist, eingesetzt wird.

12. Verfahren nach mindestens einem der Ansprüche 9 bis 11,
**dadurch gekennzeichnet,**
**dass** der Träger hydrophile Partikel aufweist.

13. Verfahren nach mindestens einem der Ansprüche 1 bis 12,
**dadurch gekennzeichnet,**
**dass** hydrophile Partikel mit einer Partikelgröße von 1 nm bis 20 µm, vorzugsweise von 5 nm bis 5 µm eingesetzt werden.

14. Verfahren nach mindestens einem der Ansprüche 1 bis 12,
**dadurch gekennzeichnet,**
**dass** hydrophile Kieselsäuren als hydrophile Partikel eingesetzt werden.

## Claims

1. Process for producing surfaces with hydrophilic properties,
**characterized in that**
particles which have hydrophilic properties are applied to a surface and secured there
wherein the hydrophilic particles are applied by applying a suspension which comprises hydrophilic particles in a solvent, and then are secured by removing the solvent and the surface of the article is swelled or solvated by the solvent, and after removal of the solvent the particles have been anchored in the surface of the article.

2. Process according to Claim 1,
**characterized in that**
the suspension is applied to at least one surface of an article by dipping the article into the suspension.

3. Process according to Claim 1,
**characterized in that**
the suspension is applied to at least one surface of an article by spraying the suspension onto the article.

4. Process according to at least one of Claims 1 to 3,
**characterized in that**
the suspension comprises a polymer dissolved in the solvent.

5. Process according to Claim 2,
**characterized in that**
the surface which is solvated by a solvent comprises polymers based on polycarbonates, on poly(meth)acrylates, on polyamides, on PVC, on polyethylenes, on polypropylenes, on aliphatic linear or branched polyalkenes, on cyclic polyalkenes, on polystyrenes, on polyesters, on polyether sulfones, on polyacrylonitrile, or on polyalkylene terephthalates, or else comprises mixtures or copolymers of these.

6. Process according to Claim 2 or 4,
**characterized in that**
the solvent used comprises at least one compound selected from the group consisting of alcohols, glycols, ethers, glycol ethers, ketones, amides, nitro compounds, halogenated hydrocarbons and mixtures of these which is a suitable solvent for the appropriate surface.

7. Process according to Claim 6,
**characterized in that**
the solvent used comprises at least one compound which is a suitable solvent for the appropriate surface selected from methanol, ethanol, propanol, butanol, octanol, cyclohexanol, phenol, kresol, ethylene glycol, diethylene glycol, dioxane, dioxolane, tetrahydrofuran, monoethylene glycol ether, diethylene glycol ether, triethylene glycol ether, polyethylene glycol ether, acetone, butanone, cyclohexanone, dimethylformamide, pyridine, N-methylpyrrolidone, N-methylcaprolactone, acetonitrile, dimethyl sulfoxide, sulfolane, nitrobenzene, dichloromethane, chloroform, tetrachloromethane, trichloroethene, tetrachloroethene, 1,2-dichloroethane, and chlorophenol, and mixtures of these.

8. Process according to at least one of Claims 1 to 17,
**characterized in that**
prior to application to the surface, the temperature of the solvent which comprises the hydrophilic particles is from -30 to 150°C, preferably from 25 to 100°C.

9. Process according to Claim 1,
**characterized in that** it comprises the steps of
a) applying a curable substance as carrier to a surface,
b) applying hydrophilic particles to the carrier, and
c) securing the particles by curing the carrier.

10. Process according to Claim 9,
**characterized in that**
the carrier is cured by thermal energy and/or by the energy present in the light.

11. Process according to Claim 9 or 10,
**characterized in that**
the curable carrier used comprises a lacquer which comprises at least a mixture made from mono- and/or polyunsaturated acrylates and/or methacrylates and/or polyurethanes, or comprises a hot-melt adhesive which comprises at least one compound selected from ethylene-ethyl acrylate copolymers, ethylene-vinyl acetate copolymers, polyamides, polyether sulfones, polyisobutenes, and polyvinyl butyrals.

12. Process according to at least one of Claims 9 to 11,
**characterized in that**
the carrier comprises hydrophilic particles.

13. Process according to at least one of Claims 1 to 12,
**characterized in that**
the hydrophilic particles used comprise those whose particle sizes is from 1 nm to 20 µm, preferably from 5 nm to 5 µm.

14. Process according to at least one of Claims 1 to 12,
**characterized in that**
the hydrophilic particles used comprise hydrophilic silicas.

## Revendications

1. Procédé de fabrication de surfaces présentant des propriétés hydrophiles, **caractérisé en ce que** l'on applique des particules, qui présentent des propriétés hydrophiles, à une surface sur laquelle on les fixe, les particules hydrophiles en question étant appliquées par le biais d'une suspension qui présente des particules hydrophiles dans un solvant, et étant fixées en éliminant ensuite le solvant, et la surface de l'objet étant attaquée par le solvant ou gonflée si bien que la particule, après élimination du solvant, est ancrée dans la surface de l'objet.

2. Procédé selon la revendication 1, **caractérisé en ce que** l'on applique la suspension sur au moins une surface d'un objet en immergeant l'objet dans la suspension.

3. Procédé selon la revendication 1, **caractérisé en ce que** l'on applique la suspension sur au moins une surface d'un objet en pulvérisant la suspension sur l'objet.

4. Procédé selon au moins l'une quelconque des revendications 1 à 3, **caractérisé en ce que** la suspension présente un polymère dissous dans le solvant.

5. Procédé selon la revendication 2, **caractérisé en ce que** la surface, qui est attaquée par un solvant, présente des polymères à base de polycarbonates, de poly(méth)acrylates, de polyamides, de PVC, de polyéthylènes, de polypropylènes, de polyalcènes aliphatiques linéaires ou ramifiés, de polyalcènes cycliques, de polystyrènes, de polyesters, de polyéther-sulfones, de polyacrylonitrile ou de poly(téréphtalates d'alkylène), ainsi que leurs mélanges ou copolymères.

6. Procédé selon l'une quelconque des revendications 2 ou 4, **caractérisé en ce que** l'on utilise, comme solvant, au moins un composé approprié comme solvant pour la surface correspondante, choisi dans le groupe constitué des alcools, des glycols, des éthers, des glycol-éthers, des cétones, des amides, des composés nitro, des hydrocarbures halogénés ou de leurs mélanges.

7. Procédé selon la revendication 6, **caractérisé en ce que** l'on utilise, comme solvant, au moins un composé approprié comme solvant pour la surface correspondante, choisi parmi le méthanol, l'éthanol, le propanol, le butanol, l'octanol, le cyclohexanol, le phénol, le crésol, l'éthylèneglycol, le diéthylèneglycol, le dioxane, le dioxolane, le tétrahydrofurane, le monoéthylèneglycoléther, le diéthylèneglycoléther, le triéthylèneglycoléther, le polyéthylèneglycol-éther, l'acétone, la butanone, la cyclohexanone, le diméthylformamide, la pyridine, la N-méthylpyrrolidone, la N-méthylcaprolactone, l'acétonitrile, le diméthylsulfoxyde, le sulfolane, le nitrobenzène, le dichlorométhane, le chloroforme, le tétrachlorométhane, le trichloro-éthène, le tétrachloroéthène, le 1,2-dichloro-éthane et le chlorophénol ou leurs mélanges.

8. Procédé selon au moins l'une quelconque des revendications 1 à 7, **caractérisé en ce que** le solvant, présentant les particules hydrophiles, a une température, avant application sur la surface, comprise dans la plage de -30 °C à 150 °C, de préférence, de 25 à 100 °C.

9. Procédé selon la revendication 1, **caractérisé en ce qu'**il comprend les étapes suivantes :
a) on applique une substance durcissable comme support sur une surface,
b) on applique des particules hydrophiles sur le support, et
c) on fixe les particules en procédant au durcissement du support.

10. Procédé selon la revendication 9, **caractérisé en ce que** le durcissement du support se fait par le biais d'une énergie thermique et/ou d'une énergie lumineuse.

11. Procédé selon la revendication 9 ou 10, **caractérisé en ce que** l'on utilise, comme support durcissable, un vernis qui présente au moins des mélanges d'acrylates et/ou de méthacrylates et/ou de polyuréthannes présentant une ou plusieurs insaturations, ou une colle fusible qui présente au moins un composé choisi parmi les copolymères d'éthylène-acrylate d'éthyle, les copolymères d'éthylène-acétate de vinyle, les polyamides, les polyéthersulfones, les polyisobutènes ou les poly(butyrals de vinyle).

12. Procédé selon au moins l'une quelconque des revendications 9 à 11, **caractérisé en ce que** le support présente des particules hydrophiles.

13. Procédé selon au moins l'une quelconque des revendications 1 à 12, **caractérisé en ce que** l'on utilise des particules hydrophiles ayant une taille particulaire de 1 nm à 20 µm, de préférence de 5 nm à 5 µm.

14. Procédé selon au moins l'une quelconque des revendications 1 à 12, **caractérisé en ce que** l'on utilise des acides siliciques hydrophiles comme particules hydrophiles.
